# FASCICULE DE BREVET EUROPEEN

(11) **EP 3 035 079 B1**
(45) Date de publication et mention de la délivrance du brevet: **23.08.2023**
(21) Numéro de dépôt: 15199770.7
(22) Date de dépôt: 14.12.2015
(51) Int. Cl.: G01S 17/88, G01S 17/89, H01S 5/40

(54) **DISPOSITIF OPTIQUE MULTIFONCTIONS COMPACT**
KOMPAKTE OPTISCHE MULTIFUNKTIONSVORRICHTUNG
COMPACT MULTIFUNCTIONAL OPTICAL DEVICE

(30) Priorité: 15.12.2014 FR 1462395
(43) Date de publication de la demande: 22.06.2016
(73) Titulaire: KEOPSYS, 22300 Lannion (FR)
(72) Inventeur: LE FLOHIC, Marc, 22560 Pleumeur-Bodou (FR)
(74) Mandataire: Ermeneux, Bertrand

(56) Documents cités:
- EP-A2- 2 772 996
- WO-A1-2004/021058
- US-A1- 2013 206 967

## Description

### 1. Domaine de l'invention

Le domaine de l'invention est celui des appareils optiques, et en particulier des lasers et des amplificateurs à fibre.

Plus précisément, l'invention concerne un dispositif optique assurant plusieurs fonctions, ou dispositif optique multifonctions.

L'invention trouve notamment une application pour le pointage, le marquage, la désignation et/ou l'illumination d'une cible. Elle s'applique également à la télémétrie et à la vélocimétrie.

### 2. Etat de la technique

Les systèmes optiques multifonctions à base de la technologie laser sont utilisés dans des domaines d'application variés, tels que l'armement, la construction, les relevés topologiques ou cadastraux, la chirurgie, ou la détection de polluants par exemple.

Dans le domaine militaire, on connait ainsi par exemple des fusils à visée laser également équipés d'un pointeur laser, d'un désignateur laser et d'un illuminateur laser.

Un inconvénient de ces systèmes connus qui combinent plusieurs appareils assurant chacun une fonctionnalité, est qu'ils sont généralement lourds et encombrants.

Ces systèmes connus présentent également l'inconvénient d'être complexes et ils sont par ailleurs le plus souvent très coûteux. Le document US 2013/206967 divulgue un système optique multifonctions connu de l'état de la technique.

### 3. Objectifs de l'invention

L'invention a donc notamment pour objectif de pallier les inconvénients de l'état de la technique cités ci-dessus.

Plus précisément l'invention a pour objectif de fournir un dispositif optique multifonctions qui soit compact.

Un objectif de l'invention, dans un mode de réalisation particulier de l'invention, est notamment de fournir un dispositif optique multifonctions composé d'un nombre réduit d'éléments.

Un objectif de l'invention est également de fournir un dispositif optique multifonctions qui garantisse que les différents faisceaux lumineux en sortie dudit dispositif soient coaxiaux.

Un autre objectif de l'invention est de fournir un tel dispositif optique multifonctions qui soit simple à mettre en oeuvre.

Encore un objectif de l'invention est de fournir un dispositif optique multifonctions qui soit d'un coût de revient réduit.

### 4. Exposé de l'invention

Ces objectifs, ainsi que d'autres qui apparaitront par la suite sont atteints à l'aide d'un dispositif optique multifonctions tel que défini par la revendication 1.

Dans le cadre de l'invention, on entend par dispositif optique multifonctions, un dispositif offrant plusieurs fonctionnalités choisies par exemple parmi la visée optique, le pointage, le marquage et/ou la désignation d'une cible, la télémétrie, la vélocimétrie, l'éclairage d'une scène ou d'une zone à traiter par ablation laser, la détection de composés chimiques, la transmission de données et/ou le brouillage d'un système de guidage laser.

Ce dispositif optique multifonctions peut comprendre 2, 3 ,4 ,5, ou plus, sources de lumière laser différentes.

Selon l'invention, ladite fibre est couplée à un dispositif optique de collimation monté en sortie dudit dispositif optique multifonctions, de sorte que les rayons desdits premier et deuxième faisceaux lumineux soient parallèles en sortie dudit dispositif optique multifonctions.

Ainsi, de façon inédite et particulièrement astucieuse, l'invention propose un dispositif optique multifonctions mettant en oeuvre une fibre optique unique pour transmettre plusieurs faisceaux lumineux, conférant de la compacité et de la simplicité au dispositif, et un collimateur pour garantir la co-axialité des axes de propagation des différents faisceaux lumineux.

Dans un mode de réalisation particulièrement avantageux de l'invention, ladite source de lumière laser comprend une diode laser.

De préférence, ladite fibre forme une fibre d'un amplificateur à fibre optique.

De façon avantageuse, lesdits faisceaux présentent une longueur d'onde comprise entre 0,4 et 2,1 micromètres.

Selon un aspect particulier de l'invention, ladite fibre appartient au groupe comprenant au moins :
- fibre dopée ;
- fibre double gaine ;
- fibre multi-coeurs.

Dans un mode de réalisation particulier de l'invention, un dispositif optique multifonctions tel que décrit ci-dessus comprend au moins un multiplexeur de longueur d'ondes couplé à ladite fibre optique.

Dans un mode de réalisation particulier de l'invention, un dispositif optique multifonctions tel que décrit ci-dessus comprend un coupleur de fibre optique à deux entrées connecté à ladite fibre optique de sorte à permettre l'injection d'un desdits faisceaux lumineux dans ladite fibre.

Dans un mode de réalisation particulier de l'invention, un dispositif optique multifonctions tel que décrit ci-dessus comprend des moyens de détection optique reliés à un circulateur optique conntecté à ladite libre optique.

Selon un aspect particulier de l'invention, ladite deuxième source de lumière appartient au groupe comprenant au moins :
- illuminateur ;
- pointeur.

Dans un mode de réalisation particulier de l'invention, un dispositif optique multifonctions tel que décrit ci-dessus forme un appareil appartenant au groupe comprenant au moins :
- désignateur laser ;
- brouilleur d'armes à guide laser ;
- lidar ;
- marqueur pour ablation laser.

Dans un mode de réalisation particulier de l'invention, un dispositif optique multifonctions tel que décrit ci-dessus comprend un troisième source de lumière laser destinée à générer un troisième faisceau lumineux de longueur d'onde distincte de celle dudit premier et dudit deuxième faisceaux lumineux et en ce que ladite fibre optique est apte à transmettre simultanément lesdits premier, deuxième et troisième faisceaux lumineux.

### 5. Liste des figures

D'autres caractéristiques et avantages de l'invention apparaitront plus clairement à la lecture de la description suivante de deux modes de réalisation de l'invention, donnés à titre de simples exemples illustratifs et non limitatifs, et des dessins annexés parmi lesquels :
- la figure 1 est une représentation schématique d'un exemple de mode de réalisation d'un lidar multifonctions selon l'invention combinant les fonctions d'un télémètre, d'un pointeur et d'un illuminateur ;
- la figure 2 représente de façon schématique un autre exemple de mode de réalisation d'un lidar multifonctions selon l'invention.

### 6. Description détaillée de l'invention

### 6.1. Exemple de mode de réalisation de l'invention

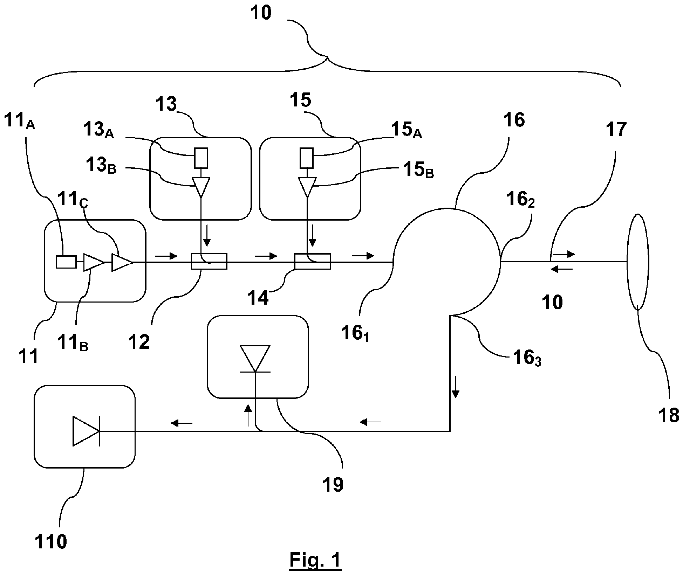

On a représenté de façon schématique sur la figure 1 un exemple de lidar (acronyme de "light détection and ranging" en anglais) multifonctions 10 selon l'invention combinant les fonctions de télémètre, de pointeur et d'illuminateur.

Ce lidar 10 comprend une source laser 11, formée d'une diode laser 11_{A} émettant un faisceau lumineux de longueur d'onde d'environ 1550nm amplifiée dans deux amplificateurs à fibre 11_{B} et 11_{C} montés en série à la sortie de la diode laser 11_{A}.

En sortie de la source laser 11, le faisceau lumineux de la source laser est multiplexé dans le multiplexeur de longueur d'ondes 12 avec un deuxième faisceau lumineux de longueur d'onde sensiblement égale à 1060 nm, émis par un pointeur 13 constitué d'une diode laser 13_{A} et d'un amplificateur à fibre 13_{B}. En sortie du multiplexeur 12, ces deux faisceaux lumineux sont multiplexés dans le multiplexeur de longueur d'ondes 14 avec un troisième faisceau lumineux de longueur d'onde sensiblement égale à 2100 nm, émis par un illuminateur 15 formé d'une diode laser 15_{A} et d'un amplificateur à fibre 15B.

Ces trois faisceaux lumineux sont ensuite injectés dans le port 16₁ d'un circulateur 16 et circulent jusqu'au port 16₂ du circulateur 16 par lequel ils pénètrent dans la fibre optique multicoeurs 17.

Les trois faisceaux lumineux se propagent dans la fibre 17 jusqu'à une lentille de collimation 18 selon l'axe optique entre la sortie de la fibre 17 et le collimateur 18. On s'assure ainsi qu'il n'existe aucun écart angulaire entre l'axe optique du faisceau de la source laser du lidar et ceux du pointeur et de l'illuminateur en sortie du dispositif 10.

Le dispositif 10 comprend également un photodétecteur 19, formée d'une photodiode, pour la mesure télémétrique, et un détecteur de polluant 110, destiné à capteur la lumière de l'illuminateur 15 réfléchie par les polluants, couplés au port 16₃ du circulateur 16.

### 6.2. Autre exemple de mode de réalisation de l'invention

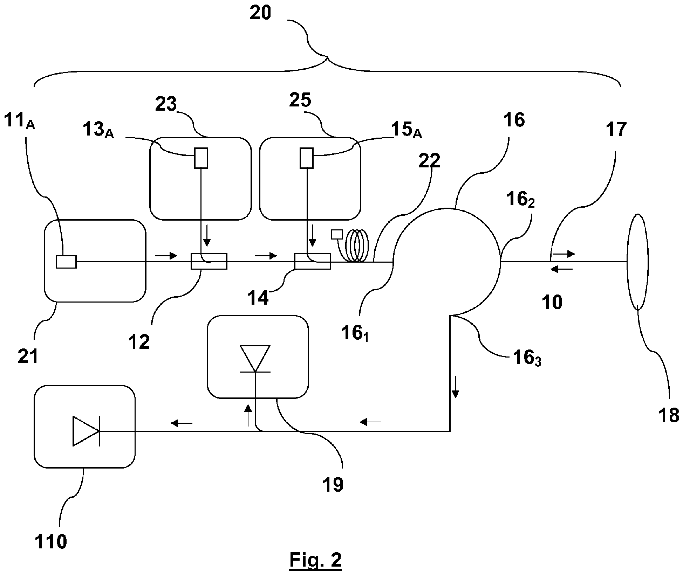

La figure 2 illustre, de façon schématique une variante du mode de réalisation de l'invention du lidar multifonctions détaillé ci-dessus.

Dans ce mode de réalisation particulier de l'invention, les faisceaux lumineux émis par la diode laser 11_{A} de la source laser 21, par la diode laser 13A du pointeur 23 et par la diode laser 15A de l'illuminateur 25 sont amplifiés par un amplificateur à fibre 22 dont l'entrée est couplée au multiplexeur 12 et la sortie au circulateur 16, ce qui permet de réduire le nombre d'éléments du lidar multifonctions 20.

## Revendications

1. Dispositif optique multifonctions (10) assurant aux moins deux fonctionnalités choisies parmi la visée optique, le pointage, le marquage et/ou la désignation d'une cible, la télémétrie, la vélocimétrie, l'éclairage d'une scène ou d'une zone à traiter par ablation laser, la détection de composés chimiques, la transmission de données et/ou le brouillage d'un système de guidage laser, ledit dispositif optique (10) comprenant un première source (11_{A}) de lumière laser destinée à générer un premier faisceau lumineux, au moins une deuxième source (13_{A}) de lumière laser destinée à générer un deuxième faisceaux lumineux de longueur d'onde distincte de celle dudit premier faisceaux lumineux et une fibre optique (17) apte à transmettre simultanément lesdits premier et deuxième faisceaux lumineux, ladite fibre (17) étant couplée à un dispositif optique de collimation (18) monté en sortie dudit dispositif optique multifonctions, ledit dispositif optique de collimation (18) permettant que les rayons desdits premier et deuxième faisceaux lumineux soient parallèles en sortie dudit dispositif optique multifonctions (10), **caractérisé en ce qu'**il comprend un multiplexeur (12) de longueur d'ondes multiplexant ledit premier faisceau et ledit deuxième faisceau et soit un premier amplificateur à fibre (11_{B}) monté entre ladite première source de lumière (11_{A}) et ledit multiplexeur (12) et un deuxième amplificateur à fibre (13_{B}) monté entre ladite deuxième source de lumière (13_{A}) et ledit multiplexeur (12) ou soit un amplificateur à fibre (22) monté entre ledit multiplexeur (12) et ladite fibre optique (17).

2. Dispositif optique multifonctions selon la revendication 1, **caractérisé en ce que** ladite première ou deuxième source de lumière laser (11_{A}, 13_{A}) comprend une diode laser.

3. Dispositif optique multifonctions selon l'une quelconque des revendications 1 et 2, **caractérisé en ce que** ladite fibre (17) forme une fibre d'un amplificateur à fibre optique.

4. Dispositif optique multifonctions selon l'une quelconque des revendications 1 à 3, **caractérisé en ce que** lesdits faisceaux lumineux présentent une longueur d'onde comprise entre 0,4 et 2,1 micromètres.

5. Dispositif optique multifonctions selon l'une quelconque des revendications 1 à 4, **caractérisé en ce que** ladite fibre (17) appartient au groupe comprenant au moins :
- fibre dopée ;
- fibre double gaine ;
- fibre multi-coeurs.

6. Dispositif optique multifonctions selon l'une quelconque des revendications 1 à 5, **caractérisé en ce qu'**il comprend un coupleur de fibre optique à deux entrées connecté à ladite fibre optique (17) de sorte à permettre l'injection desdits faisceaux lumineux dans ladite fibre (17).

7. Dispositif optique multifonctions selon l'une quelconque des revendications 1 à 6, **caractérisé en ce qu'**il comprend des moyens de détection optique (19) reliés à un circulateur optique (16) connecté à ladite libre optique (17).

8. Dispositif optique multifonctions selon l'une quelconque des revendications 1 à 7, **caractérisé en ce que** ladite deuxième source de lumière (13_{A}) appartient au groupe comprenant au moins :
- illuminateur ;
- pointeur.

9. Dispositif optique multifonctions selon l'une quelconque des revendications 1 à 8, **caractérisé en ce qu'**il forme un appareil appartenant au groupe comprenant au moins :
- désignateur laser ;
- brouilleur d'armes à guide laser ;
- lidar ;
- marqueur pour l'ablation laser.

10. Dispositif optique multifonctions selon l'une quelconque des revendications 1 à 9, **caractérisé en ce qu'**il comprend une troisième source de lumière laser (15_{A}) destinée à générer un troisième faisceau lumineux de longueur d'onde distincte de celle dudit premier et dudit deuxième faisceaux lumineux et **en ce que** ladite fibre optique (17) est apte à transmettre simultanément lesdits premier, deuxième et troisième faisceaux lumineux

## Patentansprüche

1. Optische Multifunktionsvorrichtung (10), die mindestens zwei Funktionen, ausgewählt aus dem optischen Visieren, dem Pointen, dem Markieren und/oder dem Bestimmen eines Ziels, der Telemetrie, der Velocimetrie, dem Beleuchten einer Szenerie oder einer durch Laserablation zu bearbeitenden Zone, der Detektion chemischer Verbindungen, der Übertragung von Daten und/oder der Störung eines Laserführungssystems gewährleistet, wobei die optische Vorrichtung (10) eine erste Laserlichtquelle (11_{A}) umfasst, die bestimmt ist, einen ersten Lichtstrahl zu erzeugen, mindestens eine zweite Laserlichtquelle (13_{A}), die bestimmt ist, einen zweiten Lichtstrahl mit einer Wellenlänge zu erzeugen, die von der des ersten Lichtstrahls verschieden ist, und eine optische Faser (17), die imstande ist, den ersten und zweiten Lichtstrahl gleichzeitig zu übertragen, wobei die Faser (17) an eine optische Kollimationsvorrichtung (18) gekoppelt ist, die am Ausgang der optischen Multifunktionsvorrichtung angebracht ist, wobei die optische Kollimationsvorrichtung (18) gestattet, dass die Strahlen des ersten und zweiten Lichtstrahls am Ausgang der optischen Multifunktionsvorrichtung (10) parallel sind, **dadurch gekennzeichnet, dass** sie einen Wellenlängenmultiplexer (12) umfasst, der den ersten Strahl und den zweiten Strahl multiplexiert und entweder einen ersten Faserverstärker (11_{B}), der zwischen der ersten Lichtquelle (11_{A}) und dem Multiplexer (12) angebracht ist, und ein zweiter Faserverstärker (13_{B}), der zwischen der zweiten Lichtquelle (13_{A}) und dem Multiplexer (12) angebracht ist oder einen Faserverstärker (22), der zwischen dem Multiplexer (12) und der optischen Faser (17) angebracht ist.

2. Optische Multifunktionsvorrichtung nach Anspruch 1, **dadurch gekennzeichnet, dass** die erste oder zweite Laserlichtquelle (11_{A}, 13_{A}) eine Laserdiode umfasst.

3. Optische Multifunktionsvorrichtung nach einem der Ansprüche 1 und 2, **dadurch gekennzeichnet, dass** die Faser (17) eine Faser eines optischen Faserverstärkers bildet.

4. Optische Multifunktionsvorrichtung nach einem der Ansprüche 1 bis 3, **dadurch gekennzeichnet, dass** die Lichtstrahlen eine Wellenlänge aufweisen, die zwischen 0,4 und 2,1 Mikrometer liegt.

5. Optische Multifunktionsvorrichtung nach einem der Ansprüche 1 bis 4, **dadurch gekennzeichnet, dass** die Faser (17) zu der Gruppe gehört, die mindestens umfasst:
- dotierte Faser;
- Doppelmantelfaser;
- Mehrfachkernfaser.

6. Optische Multifunktionsvorrichtung nach einem der Ansprüche 1 bis 5, **dadurch gekennzeichnet, dass** sie einen optischen Faserkoppler mit zwei Eingängen umfasst, der derart an die optische Faser (17) angeschlossen ist, dass die Einleitung der Lichtstrahlen in die Faser (17) gestattet ist.

7. Optische Multifunktionsvorrichtung nach einem der Ansprüche 1 bis 6, **dadurch gekennzeichnet, dass** sie optische Detektionsmittel (19) umfasst, die mit einem optischen Zirkulator (16) verbunden sind, der an die optische Faser (17) angeschlossen ist.

8. Optische Multifunktionsvorrichtung nach einem der Ansprüche 1 bis 7, **dadurch gekennzeichnet, dass** die zweite Lichtquelle (13_{A}) zu der Gruppe gehört, die mindestens umfasst:
- Illuminator;
- Pointer.

9. Optische Multifunktionsvorrichtung nach einem der Ansprüche 1 bis 8, **dadurch gekennzeichnet, dass** sie ein Gerät bildet, das zu der Gruppe gehört, die mindestens umfasst:
- Laserbezeichner;
- Störer lasergeführter Waffen;
- Lidar;
- Markierer für Laserablation.

10. Optische Multifunktionsvorrichtung nach einem der Ansprüche 1 bis 9, **dadurch gekennzeichnet, dass** sie eine dritte Laserlichtquelle (15_{A}) umfasst, die bestimmt ist, einen dritten Lichtstrahl mit einer Wellenlänge zu erzeugen, die von der des ersten und des zweiten Lichtstrahls verschieden ist und dass die optische Faser (17) imstande ist, den ersten, zweiten und dritten Lichtstrahl gleichzeitig zu übertragen.

## Claims

1. A multifunctional optical device (10) providing at least two functionalities selected from optical aiming, pointing, marking and/or designating a target, telemetry, velocimetry, illuminating a scene or an area to be treated by laser ablation, detecting chemical compounds, transmitting data and/or jamming a laser guidance system, said optical device (10) comprising a first laser light source (11_{A}) for generating a first light beam, at least one second laser light source (13_{A}) for generating a second light beam of wavelength different from that of said first light beam, and an optical fibre (17) suitable for simultaneously transmitting said first and second light beams, said fibre (17) being coupled to an optical collimation device (18) mounted at the output of said multifunction optical device, said optical collimation device (18) allowing the rays of said first and second light beams to be parallel at the output of said multifunction optical device (10), **characterised in that** it comprises a wavelength multiplexer (12) multiplexing said first beam and said second beam and either a first fibre amplifier (11_{B}) mounted between said first light source (11_{A}) and said multiplexer (12) and a second fibre amplifier (13_{B}) mounted between said second light source (13_{A}) and said multiplexer (12) or a fibre amplifier (22) mounted between said multiplexer (12) and said optical fibre (17).

2. The multifunction optical device according to claim 1, **characterised in that** said first or second laser light source (11A, 13A) comprises a laser diode.

3. The multifunctional optical device according to any one of claims 1 and 2, **characterised in that** said fibre (17) forms a fibre of an optical fibre amplifier.

4. The multifunctional optical device according to any one of claims 1 to 3, **characterised in that** the said light beams have a wavelength of between 0.4 and 2.1 micrometres.

5. The multifunctional optical device according to any one of claims 1 to 4, **characterised in that** said fibre (17) belongs to the group comprising at least:
- a doped fibre;
- a double-clad fibre;
- a multi-core fibre.

6. The multifunctional optical device according to any one of claims 1 to 5, **characterised in that** it comprises a two-input optical fibre coupler connected to said optical fibre (17) so as to allow injection of said light beams into said fibre (17).

7. The multifunctional optical device according to any one of claims 1 to 6, **characterised in that** it comprises optical detection means (19) connected to an optical circulator (16) connected to said optical fibre (17).

8. The multifunctional optical device according to any one of claims 1 to 7, **characterised in that** said second light source (13A) belongs to the group comprising at least:
- an illuminator;
- a pointer.

9. The multifunctional optical device according to any one of claims 1 to 8, **characterised in that** it forms an apparatus belonging to the group comprising at least:
- a laser designator;
- a laser-guided weapon jammer;
- a lidar;
- a laser ablation marker.

10. The multifunctional optical device according to any one of claims 1 to 9, **characterised in that** it comprises a third laser light source (15A) intended to generate a third light beam of wavelength distinct from that of the said first and the said second light beam and **in that** the said optical fibre (17) is capable of transmitting the said first, second and third light beams simultaneously.
